Europäisches Patentamt

European Patent Office

Office européen des brevets

(19)

(11) Veröffentlichungsnummer: **0 000 513**
**B1**

(12) **EUROPÄISCHE PATENTSCHRIFT**

(21) Anmeldenummer: **78100384.3**

(22) Anmeldetag: **12.07.78**

(51) Int. Cl³: **C 08 F 12/08,**
**C 08 F 2/18,**
**C 08 J 11/04**

(54) **Verfahren zur Wiederverwendung von Dekantermaterial, das bei der Aufarbeitung des Abwassers aus der Produktion von Polystyrol anfällt**

(30) Priorität: **25.07.77 DE 2733471**

(43) Veröffentlichungstag der Anmeldung:
**07.02.79 Patentblatt 79/03**

(45) Bekanntmachung des Hinweises auf die Patenterteilung:
**23.07.80 Patentblatt 80/15**

(84) Benannte Vertragsstaaten:
**BE DE FR GB NL**

(56) Entgegenhaltungen:
**DE - A - 2 150 056**
**DE - A - 2 628 761**
**FR - A - 1 368 544**
**GB - A - 1 416 405**

(73) Patentinhaber: **BASF Aktiengesellschaft**
**Carl-Bosch-Strasse 38**
**D - 6700 Ludwigshafen (DE)**

(72) Erfinder: **Kniese, Wilhelm, Dr.**
**Auf der Wacht 13**
**D - 6702 Bad Duerkheim (DE)**
**Keppler, Hans Georg, Dr.**
**Gaesselweg 2**
**D - 6940 Weinheim (DE)**
**Moeller, Rolf, Dr.**
**Strassburger Weg 1**
**D - 6700 Ludwigshafen (DE)**
**Guhr, Uwe, Dr.**
**Beim Hochgericht 9**
**D - 6719 Grünstadt 1 (DE)**

Verfahren zur Wiederverwendung von Dekantermaterial, das bei der Aufarbeitung des Abwassers
aus der Produktion von Polystyrol anfällt

Polystyrol, insbesondere expandierbares Polystyrol, wird großtechnisch durch Polymerisation von Styrol in wäßriger Suspension hergestellt. Nach beendeter Polymerisation wird die Hauptmenge der Polystyrol-Partikel durch Abschleudern von der wäßrigen Phase abgetrennt. Dabei verbleibt ein Teil des Polymeren, im allgemeinen etwa 2 bis 4 Gew.%, bezogen auf das eingesetzte Styrol, in Form von feinsten Perlen im Abwasser. Wurde die Suspensionspolymerisation so gesteuert, daß bevorzugt feinteilige Polymerpartikel anfallen, so erhöht sich die Menge des im Abwasser verbleibenden Polymeren auf 5% oder mehr. Diese feinsten Partikel werden — vor allem aus Umweltschutzgründen — aus dem Abwasser durch Dekantieren zurückgewonnen. Das dabei erhaltene sogenannte Dekantermaterial besteht größtenteils aus sehr feinteiligem, gegebenenfalls treibmittelhaltigem Polystyrol, das verhältnismäßig große Mengen an Emulsionspolymerisat und anderen hydrophilen Verunreinigungen enthält. Es ist nicht direkt zur Weiterverarbeitung, z.B. zur Herstellung von Schaumstoffen geeignet.

Es gibt eine Reihe von Möglichkeiten, das Dekantermaterial wirtschaftlich zu nutzen, z.B. durch Umarbeitung mit Hilfe von Extrudern, die zu farbigen oder in besonderer Weise geformten, Granulaten führt. Diese Methoden sind vor allem deshalb kostenintensiv, weil man vor der Verarbeitung auf einem Extruder eine Trocknung durchführem muß, die mit Emissionen in Form von Abluft verbunden ist.

Es wäre deshalb von großem Vorteil, wenn man das Dekantermaterial so wie es aus dem Dekanter abgetrennt wird, wieder verwenden könnte. Naheliegend wäre, das Dekantermaterial in monomerem Styrol aufzulösen und anschließend das Styrol in wäßriger Suspension nach einem Verfahren, wie es in der FR—B 1 368 544 beschrieben ist, zu polymerisieren. Es hat sich aber gezeigt, daß dabei die Gefahr zu Koagulation sehr groß ist und man bestenfalls ein Perlpolymerisat erhält, das trüb ist, sehr große Innenwassergehalte aufweist und zu Schaumstoffen mit unregelmäßiger Schaumstruktur führt.

In der GB-A 1 416 405 ist ein Verfahren zur Herstellung von Polystyrolpartikeln mit einhaltlicher Teilchengröße beschrieben, bei dem vorgebildete Polystyrolpartikel mit einem Durchmesser von größer als 0,4 mm in Wasser suspendiert werden, in die Suspension monomeres Styrol zugegeben wird und dieses in Gegenwart von Polymerisationskatalysatoren und Retardern polymerisiert wird. In der Patentschrift wird auch angegeben, daß versucht wurde kleinere Polystyrolteilchen in Styrol aufzulösen und dieses zu polymerisieren. Dabei wurden aber keine brauchbaren Ergebnisse erhalten.

Der Erfindung lag die Aufgabe zugrunde, das Dekantermaterial wirtschaftlich aufzuarbeiten und einer Wiederverwendung zuzuführen.

Es wurde gefunden, daß diese Aufgabe gelöst wird, wenn man das Dekantermaterial in Styrol auflöst und das Styrol polymerisiert, und dabei aber das Dekantermaterial vor der Polymerisation des Styrols mit Wasser behandelt. Es kann angenommen werden, daß bei dieser Reinigungsoperation ein Großteil der die Polymerisation störenden Substanzen mit der wäßrigen Phase entfernt wird.

Gegenstand der Erfindung ist demzufolge ein Verfahren zur Wiederverwendung von Dekantermaterial, das in Form von feinen Polystyrolperlen mit einem mittleren Teilchendurchmesser von mindestens 0,05 mm und höchstens 0,3 mm anfällt, wenn man beim Aufarbeiten des Abwassers aus der Produktion von Polystyrol durch Suspensionspolymerisation die Feststoffe abtrennt, durch Auflösen der Teilchen in monomerem Styrol im Gewichtsverhältnis Styrol zu Dekantermaterial von 100 : 1 bis 1 : 1, und Polymerisieren des Styrols in wäßriger Suspension in Gegenwart von Radikalinitiatoren und gegebenenfalls weiteren Polymerisationshilfsmitteln bei erhöhter Temperatur. Es ist dadurch gekennzeichnet, daß vor der Polymerisation des Styrols das Dekantermaterial mit Wasser im Gewichtsverhältnis von 1 : 50 bis 1 : 1 bei Temperaturen zwischen 10°C und 100°C behandelt wurde, wobei jedoch in dem Fall, daß die Behandlung in Gegenwart von Styrol und Radikalinitiatoren vorgenommen wird, die Temperatur von 80°C nicht überschritten werden darf.

Das Dekantermaterial wird durch Abtrennen der Feststoffe aus dem Abwasser der Produktion von expandierbarem Polystyrol gewonnen. Dieses Abtrennen geschieht zweckmäßigerweise durch Dekantieren, z.B. durch Abschleudern mit einer Vollmantelzentrifuge. Dabei fallen feine Polystyrol-Perlen mit einem mittleren Teilchendurchmesser von mindestens 0,05 und höchstens 0,3 mm an.

Das Dekantermaterial wird in Wasser suspendiert, wobei das Gewichtsverhältnis Wasser : Dekantermaterial in weiten Grenzen zwischen 50 : 1 und 1 : 1 schwanken kann und vorzugsweise zwischen 20 : 1 und 2 : 1 liegt. Dem Wasser können Dispergierhilfsmittel, z.B. Polyvinylalkohol oder Polyvinylpyrrolidon zugesetzt werden, ferner Puffersubstanzen, die gegebenenfalls bei einer späteren Suspensionspolymerisation benötigt werden.

Die Reinigung des Dekantermaterials mit Wasser kann auf verschiedene Weise erfolgen: Bei einer bevorzugten Arbeitsweise wird die wäßrige Suspension des Dekantermaterials bei Temperaturen zwischen 10° und 100°, vorzugsweise zwischen 20° und 50°C 5 bis 90 min, vorzugsweise 15 bis 45 min lang gerührt.

Das gereinigte Material wird dann wieder durch Dekantieren vom Wasser abgetrennt. Daran kann sich gegebenenfalls eine weitere Waschoperation anschließen. Das erhaltene feuchte Pulver wird dann in monomerem Styrol gelöst, wobei das Gewichtsverhältnis Monomeres : Dekantermaterial hier vorzugsweise zwischen 50 : 1 und 5 : 1 liegt. Diese organische Phase wird dann zusammen mit Polymerisationshilfsmittel, wie z.B. Polymerisationsinitiatoren und Suspendierhilfsmitteln in Wasser suspendiert und in üblicher Weise bei erhöhter Temperatur polymerisiert. Man kann aber auch das gereinigte feuchte Pulver unter Rühren einer Suspension von Styrol in Wasser zusetzen, wobei es vom Styrol gelöst wird, und dann die Suspensionspolymerisation durchführen.

Bei einer anderen bevorzugten Arbeitsweise wird zu der wäßrigen Suspension des Dekantermaterials monomeres Styrol zugegeben, wobei das Gewichtsverhältnis Monomeres : Dekantermaterial hier vorzugsweise zwischen 10 : 1 und 2 : 1 liegt.

Die wäßrige Phase und die organische Phase werden dann bei Temperaturen zwischen 10 und 100°C, vorzugsweise zwischen 50 und 90°C, miteinander verrührt. Die Rührzeit richtet sich nach der Temperatur und dem Verhältnis Monomeres; Dekantermaterial. Je höher die Temperatur und je höher das Monomeren- : Dekantermaterial-Verhältnis ist, desto kürzere Rührzeiten sind erforderlich. Auf jeden Fall sollte aber hier mindestens eine Stunde lang gerührt werden, um das Polystyrol im Dekantermaterial in genügendem Maße durch das Monomere zu extrahieren. Im allgemeinen liegt die Rührdauer zwischen 2 Stunden und 2 Tagen. Bei einem Verhältnis Styrol : Dekantermaterial von 1 : 1 muß man bei 20°C etwa 60 Stunden lang rühren, um im wesentlichen alles Styrol zu extrahieren; nach 18 Stunden sind erst 20% herausgelöst. Ein besonderer Vorteil dieses Verfahrens besteht darin, daß man nach der Extraktion organische und wäßrige Phase nicht zu trennen braucht, sondern daß man die organische Phase direkt in Gegenwart der wäßrigen Phase polymerisieren kann, wobei man gleichmäßig runde, klare Perlen mit geringem Innenwassergehalt erhält. Es ist vorteilhaft, wenn die Extraktion bereits im Polymerisationskessel durchgeführt wird. Nach beendeter Extraktion braucht man der Styrolphase nur noch die für die Herstellung eines bestimmten Perlpolymerisats erforderlichen Hilfstoffe und Radikalinitiatoren zuzugeben und kann dann ohne weitere Zwischenoperationen die Polymerisation bei erhöhter Temperatur durchführen.

Es ist auch möglich, die Radikalinitiatoren bereits im Styrol gelöst bei der Extraktion zuzusetzen. Dabei darf dann die Temperatur bei der Extraktion 80°C nicht überschreiten, da sonst die Gefahr besteht, daß die Polymerisation bereits vor beendeter Extraktion einsetzt.

Grundsätzlich kann statt Styrol allein auch eine Mischung von Styrol mit bis zu 50 Gew.% anderer copolymerisierbarer Monomerer, wie z.B. $\alpha$-Methylstyrol, kernhalogenierte Styrole, Divinylbenzol, Acrylnitril, Ester der Acryl- oder Methacrylsäure, N-Vinylverbindungen oder 1,3-Diolefine eingesetzt werden.

Die Suspensionspolymerisation des Styrols bzw. des Monomerengemisches wird unter üblichen Bedingungen durchgeführt. Das im Monomeren gelöste Dekantermaterial stört dabei nicht. Die Polymerisation wird im allgemeinen bei Temperaturen zwischen 80 und 130°C, insbesondere zwischen 100 und 120°C, durchgeführt. Zum Starten der Polymerisation werden die üblichen Polymerisationsinitiatoren, wie Peroxide oder Azoverbindungen verwendet. Als Suspensionsstabilisatoren werden entweder organische Schutzkolloide, wie Polymerisate des Vinylpyrrolidons, Polyvinylalkohol oder Celluloseäther oder schwerlösliche anorganische Salze, wie Calciumphosphat, verwendet. Sie können vor oder während der Polymerisation zugesetzt werden. Durch Variation des Zugabezeitpunktes der Suspensionsstabilisatoren ist eine Regulierung des Perlspektrums möglich. Während oder nach der Suspensionspolymerisation werden in bekannter Weise flüchtige Kohlenwasserstoffe oder halogenierte kohlenwasserstoffe als Treibmittel zugesetzt. Zur Herstellung flammwidriger Styrolpolymerisate können der Suspension organische Halogenverbindungen als Flammschutzmittel zugegeben werden.

Die bei der Suspensionspolymerisation erhaltenen treibmittelhaltigen Styrolpolymerisate eignen sich zur Herstellung von Schaumstoffen. Das erfindungsgemäße Verfahren ist besonders geeignet zur Herstellung feinperliger Polymerisate, die bei der Porosierung von Ziegelsteinen verwendet werden.

Die in den Beispielen genannten Teile und Prozente beziehen sich auf das Gewicht.

Beispiel 1

A. Abtrennen des Dekantermaterials

Ausgegangen wurde von dem Abwasser aus einer Suspensionspolymerisation von Styrol, aus der Polymerisatperlen durch Abschleudern abgetrennt worden waren. Dieses Abwasser enthielt 2 Gew.% feiner Polystyrol-Perlen mit einem mittleren Durchmesser kleiner als 0,3 mm. Es wurde einem Dekanter (Westfalia SDA 230) zugeführt und durch Abschleudern ein Polymermaterial mit einem Feuchtigkeitsgehalt von 3 bis 8% abgetrennt.

B. Reinigung des Dekantermaterials

a) Das Dekantermaterial aus A. wurde im Verhältnis 1 : 9 in Wasser aufgeschlämmt und bei 20°C 20 min. lang gerührt. Dann wurde erneut abdekantiert. Der Reinigungseffekt ist daran zu erkennen, daß das Dekantat nur Teilchen mit einem Durchmesser von kleiner als 0,05 mm enthält. Der Feststoffgehalt des Dekantats betrug 0,4 %. Die Ausbeute, bezogen auf eingesetztes Material, betrug 95 %.

b) Die Ausführung erfolgte analog a). Es wurde der Mischung vor der Abtrennung jedoch 1 % Polyvinylpyrrolidon, bezogen auf organisches Material, zugesetzt. Der Feststoffgehalt des Dekantats betrug 0,6 %, bestehend aus Teilchen mit einem Durchmesser von weniger als 0,05 mm. Die Ausbeute betrug 94 %.

C. Wiedereinsetzung des gereinigten Dekantermaterials

a) In 95 Teilen Styrol wurden 5 Teile des nach B. a) behandelten Materials gelöst. In einem mit Rührwerk ausgestateten druckfesten Rührbehälter wurde eine Mischung eingefüllt aus

100 Teilen Wasser
  0,1 Teilen Natriumpyrophosphat
 95 Teilen Styrol mit
  5 Teilen Dekantermaterial,
  0,155 Teilen Dibenzoylperoxid,
  0,266 Teilen tert.-Butylperbenzoat und
  0,04 Teilen Hexabromcyclododecan.

Die Mischung wurde unter Rühren in einem geschlossenen Kessel 4 Stunden bei 90°C, 2 Stunden bei 105°C und anschließend 3 Stunden bei 120°C polymerisiert. Als Suspensionsstabilisator wurden 3,5 Teile einer 10 %igen Polyvinylpyrroldionlösung in Wasser nach 130 Minuten zudosiert, so daß eine mittlere Perlgröße von 1,2 bis 1,6 mm gebildet wurde. 3 Stunden nach Erreichen von 90°C wurden 7 Teile Pentan innerhalb von 10 bis 15 Minuten zugegeben.

Zur Bestimmung des Innenwassergehaltes wurde eine Probe (Perlfraktion von 1,25 bis 2,0 mm) zur Beseitigung des Außenwassers 2 Minuten mit Methanol behandelt, sodann auf einer Nutsche abgesaugt und 5 Minuten mit Luft von 20°C im Gegenstrom trockengeblasen. Der Innenwassergehalt wurde nach der Methode von Karl-Fischer bestimmt. Er betrug 0,61 %.

Die Ausführung der Perlpolymerisation erfolgte analog C.

a); es wurden jedoch als Auflösematerial 5 Teile des nach B. b) behandelten Materials eingesetzt. Das Perlpolymerisat hatte einen mittleren Durchmesser von 1,32 mm; der Innenwassergehalt betrug 0,50 %.

Die Ausführung der Perlpolymerisation erfolgte analog C.

a), wobei aber die 5 Teile des nach B. a) behandelten Materials nicht in Styrol gelöst, sondern direkt der wäßrigen Phase hinzugefügt wurden. Das Perlpolymerisat hatte einen mittleren Durchmesser von 1,35 mm. Der Innenwassergehalt betrug 0,51 %.

Vergleichsversuch

Die Ausführung erfolgte analog C. a); es wurden jedoch 5 Teile des nach A. abgetrennten, jedoch nicht weiterbehandelten Materials eingesetzt. Das erhaltene Perlpolymerisat hatte einen mittleren Durchmesser von 1,38 mm. Die Bestimmung des Innenwassergehaltes ergab 3,5 % Wasser.

Beispiel 2

a) In einem mit Rührwerk, Thermometer und Heizung ausgestatteten 1 m³-Druckkessel wurden unter Rühren 0,414 Teile Natriumpyrophosphat in 521 Teilen Wasser gelöst. In dieser Lösung wurden 136 Teile feuchtes Dekantermaterial suspendiert, welches 10 % Wasser enthielt und einen mittleren Teilchendurchmesser von etwa 0,15 mm aufwies. Dieser Suspension wurden 371 Teile Styrol zugesetzt und nach Verschließen und Spülen des Kessels mit Stickstoff wurde 16 Stunden lang bei 25°C gerührt. Dann wurden 0,488 Teile Dibenzoylperoxid, 0,879 Teile tert.-Butylperbenzoat und 0,082 Teile Hexabromcyclodecan zugegeben, Stickstoff aufgepreßt und die Mischung unter Rühren innerhalb von 8 Stunden auf 120°C hochgeheizt und 4 Stunden bei dieser Temperatur gehalten. In der Aufheizphase wurde 60 Minuten nach Erreichen von 80°C 17,6 Teile einer 10 %igen wäßrigen Lösung von Polyvinylpyrrolidon zugegeben, 46 Teile Pentan wurden 1 Stunde danach zudosiert. Nach beendeter Polymerisation, Abkühlen, Abtrennen der wäßrigen Phase und Trocknen wurden 482 Teile klare Perlen erhalten (92 % Ausbeute). Die Perlen hatten einen Wassergehalt von 0,8 % und eine mittlere Teilchengröße von etwa 0,7 mm.

b) Man arbeitet wie in Beispiel 2a, rührt jedoch die Suspension zusammen mit dem Styrol 1 Stunde bei 98°C. Dann kühlt man auf 40°C ab, setzt die Peroxide zu und polymerisiert wie in Beispiel 2a beschrieben. Man erhält 490 Teile klare Perlen mit einem Innenwassergehalt von 0,8 % und der mittleren Teilchengröße von 1,1 mm.

c) Vergleichsbeispiel
296 Teile Styrol wurden in einem Rührkessel vorgelegt und darin 218 Teile feuchtes Dekantermaterial (mit 10 % Wasser) durch Rühren bei Raumtemperatur aufgelöst. Nach 16 Stunden wurden 0,075 Teile Hexabromcyclododecan, 0,472 Teile Dibenzoylperoxid und 0,703 Teile tert.-Butylperbenzoat zugesetzt und 30 Minuten nachgerührt. Dann wurden 509 Teile Wasser zulaufen lassen, 0,424 Teile Nadriumpyrophosphat und 17,6 Teile 10 %iger wäßriger Polyvinylpyrrolidonlösung zugegeben und unter Rühren und 1 bar Stickstoff-Druck in 8 Stunden auf 120°C aufgeheizt. 4 Stunden wurde bei einer Temperatur gehalten und dann abgekühlt. Während des Aufheizens wurden bei 80°C 48 Teile Pentan zugesetzt. Nach der üblichen Aufarbeitung wurden 485 Teile (92,5 % Ausbeute) perlförmiges Granulat mit einem mittleren Teilchendurchmesser von etwa 1,5 mm erhalten. Die Perlen waren sehr trüb und etwa jede dritte enthielt Lunker. Der Wassergehalt betrug 7,6 %.

### Beispiel 3

In einem mit Rührwerk, Thermometer und Heizung ausgestattetem 1 m³-Druckkessel werden unter Rühren 0,411 Teile Natriumpyrophosphat in 517 Teilen Wasser gelöst. In dieser Lösung werden 181 Teile feuchtes Dekantermaterial (ca. 10 % Wasser, mittlere Teilchengröße 0,15 mm) suspendiert. Dazu gibt man unter Rühren 330 Teile Styrol, 0,392 Teile Dibenzoylperoxid und 0,781 Teile Tert.-Butylperbenzoat. Man preßt mit Stickstoff auf 1 bar und heizt auf 60°C. Man verhält bei dieser Temperatur unter Rühren vier Stunden lang, heizt dann weiter bis auf 120°C, wobei die Polymerisation einsetzt, und hält weitere vier Stunden bei dieser Temperatur. In der Aufheizphase werden 30 Minuten nach Erreichen von 80°C 17,6 Teile einer 10 %igen wäßrigen Lösung von Polyvinylpyrrolidon zugegeben; 35 Teile Pentan werden 1 Stunde danach zudosiert.

Nach Abkühlen, Abtrennen der wäßrigen Phase und Trocknen werden 466 Teile klare Perlen erhalten (88 % Ausbeute); sie haben einen Innenwasserwert von 0,6 % und eine mittlere Teilchengröße von 0,95 mm. In der abgetrennten wäßrigen Phase werden 7 % Feststoff analysiert.

### Patentansprüche

1. Verfahren zur Wiederverwendung von Dekantermaterial, das in Form von feinen Polystyrolperlen mit einem mittleren Teilchendurchmesser von mindestens 0,05 mm und höchstens 0,3 mm anfällt, wenn man beim Aufarbeiten des Abwassers aus der Produktion von Polystyrol durch Suspensionspolymerisation die Feststoffe abtrennt, durch Auflösen der Teilchen in monomerem Styrol im Gewichtsverhältnis Styrol zu Dekantermaterial von 100 : 1 bis 1 : 1, und Polymerisieren des Styrols in wäßriger Suspension in Gegenwart von Radikalinitiatoren und gegebenenfalls weiteren Polymerisationshilfsmitteln bei erhöhter Temperatur, *dadurch gekennzeichnet,* daß vor der Polymerisation des Styrols das Dekantermaterial mit Wasser im Gewichtsverhältnis von 1 : 50 bis 1 : 1 bei Temperaturen zwischen 10°C und 100°C behandelt wurde, wobei jedoch in dem Fall, daß die Behandlung in Gegenwart von Styrol und Radikalinitiatoren vorgenommen wird, die Temperatur von 80°C nicht überschritten werden darf.

2. Verfahren zur Wiederverwendung von Dekantermaterial nach Anspruch 1, *dadurch gekennzeichnet,* daß die Teilchen in Wasser suspendiert, bei Temperaturen zwischen 20° und 50°C 5 bis 90 Minuten lang gerührt und nach Abtrennung des Wassers im Styrol gelöst wurden.

3. Verfahren zur Wiederwendung von Dekantermaterial nach Anspruch 1, *dadurch gekennzeichnet,* daß die Teilchen im Wasser suspendiert wurden, zu dieser Suspension das Styrol zugesetzt wurde und die wäßrige und organische Phase mindestens 1 Stunde lang miteinander verrührt wurden.

4. Verfahren nach Anspruch 3, *dadurch gekennzeichnet,* daß das Verrühren bei Temperaturen zwischen 50 und 90°C vorgenommen wurde.

### Revendications

1. Procédé pour réutiliser une matière décantée sous forme de perles fines de polystyrène ayant un diamètre de particule moyen d'au moins 0,05 mm et de 0,3 mm au maximum, lors du traitement des eaux résiduaires de la production du polystyrène par polymérisation en suspension pour séparation des matières solides, par dissolution des particules dans du styrène monomère dans des proportions relatives en poids styrène/matière décantée de 100 : 1 à 1 : 1 et polymérisation du styrène en suspension aqueuse en présence d'inducteurs radicalaires et, le cas échéant, d'autres produits auxiliaires de polymérisation à chaud, ce procédé se caractérisant en ce que, avant la polymérisation du styrène, on traite la matière décante par l'eau dans des proportions relatives en poids de 1 : 50 à 1 : 1, à des températures de 10 à 100°C, étant précisé toutefois que, lorsque le traitement est effectué en présence du styrène, et d'inducteurs radicalaires, on ne doit pas dépasser la température de 80°C.

2. Procédé selon la revendication 1, caractérisé en ce que l'on met les particules en suspension dans l'eau, on agite pendant une durée de 5 à 90 minutes à des températures de 20 à 50°C et, après séparation de l'eau, on dissout la matière dans le styrène.

3. Procédé selon la revendication 1, caractérisé en ce que l'on met les particules en suspension dans l'eau, on ajoute le styrène à cette suspension et on agite la phase aqueuse et la phase organique ensemble pendant au moins 1 h.

4. Procédé selon la revendication 3, caractérisé en ce que l'on agite à des températures de 50 à 90°C.

### Claims

1. A process for reusing decanter material obtained in the form of fine polystyrene beads having a mean particle diameter of at least 0.05 mm and at most 0.3 mm when separating the solids in processing the waste water from the production of polystyrene by suspension polymerization, by dissolving the particles in monomeric styrene in a weight ratio of styrene to decanter material of from 100 : 1 to 1 : 1 and polymerizing the styrene in aqueous suspension in the presence of free-radical initiators and, if desired, further polymerization aids at elevated temperature, *characterized in that* prior to polymerization of the styrene the decanter material is treated with water in a weight ratio of from 1 : 50 to 1 : 1 at a temperature between 10° and 100°C, provided, however, that when carrying out the treatment in the presence of styrene and free-radical initiators the temperature of 80°C must not be exceeded.

2. A process for reusing decanter material according to claim 1, *characterized in that* the particles are suspended in water, stirred at temperatures between 20° and 50°C for from 5 to 90 minutes and, after separation of the water, dissolved in styrene.

3. A process for reusing decanter material according to claim 1, *characterized in that* the particles are suspended in water, the styrene is added to this suspension and the aqueous and organic phases are stirred together for at least 1 hour.

4. A process for reusing decanter material according to claim 3, *characterized in that* stirring is carried out at temperatures between 50 and 90°C.